Europäisches Patentamt

European Patent Office

Office européen des brevets

(19)

(11) Numéro de publication: **0 240 418**
**B1**

(12) FASCICULE DE BREVET EUROPEEN

(45) Date de publication du fascicule du brevet:
30.05.90

(51) Int. Cl.⁵: **C03B 23/025**, C03B 23/035

(21) Numéro de dépôt: 87400677.8

(22) Date de dépôt: 26.03.87

(54) **Procédé et dispositif de formage du verre.**

(30) Priorité: 03.04.86 FR 8604774

(43) Date de publication de la demande:
07.10.87 Bulletin 87/41

(45) Mention de la délivrance du brevet:
30.05.90 Bulletin 90/22

(84) Etats contractants désignés:
BE CH DE ES FR GB IT LI SE

(56) Documents cités:
EP-A- 0 003 391
FR-A- 2 085 464
US-A- 4 204 854

(73) Titulaire: SAINT-GOBAIN VITRAGE INTERNATIONAL,
18, avenue d'Alsace, F-92400 Courbevoie(FR)

(72) Inventeur: Letemps, Bernard, 5, Avenue du Gros
Buisson, F-60150 Thourotte(FR)
Inventeur: Périn, Francis, 6, Impasse des Acacias La
Turlurette, F-58160 Sauvigny Les Bois(FR)
Inventeur: Petitcollin, Jean-Marc, 12, rue de Verdun Le
Plessis Brion, F-60150 Thourotte(FR)
Inventeur: Prouveur, Hervé, Rue pasteur,
F-59111 Saint-Amand(FR)

(74) Mandataire: Leconte, Jean-Gérard et al, Saint-Gobain
Recherche 39, Quai Lucien Lefranc,
F-93304 Aubervilliers Cedex(FR)

**Description**

La présente invention a trait aux techniques de formage du verre et plus spécialement aux techniques d'obtention de feuilles de verre profilées trempées, utilisées dans des véhicules automobiles ou autres en tant que pare-brise, glaces latérales, glaces arrières ou encore en tant que toits ouvrants.

Elle a plus précisément pour objet conformément au préambule de la revendication 1 un dispositif de formage de feuilles de verre pour la mise en œuvre du procédé de formage selon lequel les feuilles de verre sont amenées horizontalement dans un four de chauffage puis conduites à un poste de formage où elles sont transférées verticalement jusqu'à une forme supérieure, l'application contre la forme supérieure étant obtenue par aspiration, les feuilles de verre étant alors laissées tomber sur un cadre de bombage où le verre s'affaisse sous l'effet de l'inertie et de la gravité.

L'invention a également pour objet conformément au préambule de la revendication 13 un procédé de formage suivant lequel la feuille de verre est échauffée en position horizontale dans un four de chauffage, transférée verticalement jusqu'à une forme supérieure ayant un rayon de courbure supérieur à celui que l'on désire conférer à la feuille de verre et est laissée tomber sur un cadre de bombage où le verre s'affaisse sous l'effet de la gravité.

De façon usuelle, la fabrication de tels vitrages automobiles est obtenue par la succession de trois étapes distinctes, l'échauffement du verre jusqu'à son point de ramollissement, la déformation de la feuille de verre plane afin de lui faire épouser la courbure souhaitée et enfin une trempe du verre lui assurant une plus grande résistance aux chocs et une plus grande fragmentation en cas de rupture. Une méthode industrielle des plus souvent employées consiste à pratiquer l'échauffement du verre dans un four de chauffage horizontal dans lequel sont chargées une à une les feuilles de verre planes, convoyées par exemple sur un lit de rouleaux. Le convoyeur se prolonge après le four de chauffage et amène alors la feuille de verre au poste de formage. Dans celui-ci la feuille de verre est bombée, puis libérée avant d'être acheminée au poste de trempe.

La publication de brevet EP-0 003 391, au nom de Messieurs Harold Mc. Master, Norman Carl NITSCHKE, John Stephen NITSCHKE, décrit un dispositif spécialement adapté à la fabrication de vitrages automobiles trempés qui comporte un four horizontal traversé par un convoyeur, un dispositif de bombage et un dispositif de trempe. Le bombage est réalisé sur un cadre sur lequel la feuille de verre s'affaisse sous l'effet de l'inertie et de la gravité, et prend la forme souhaitée avant d'être conduite au poste de refroidissement ou de trempe.

Le transfert du convoyeur traversant le four au cadre de bombage est obtenu par aspiration de la feuille de verre qui vient se plaquer contre une forme d'aspiration supérieure plane en ciment réfractaire, percée par de multiples trous sur tout ou partie de sa surface et de surface plus grande que celle de la feuille de verre à former. Ces trous, régulièrement répartis, communiquent avec une chambre de dépression de telle sorte que toute la surface de la feuille de verre est aspirée vers la forme supérieure. Puis le cadre de bombage est amené sous la feuille soulevée et la recueille après que la dépression ait cessé.

Des dispositifs de formage et de trempe de ce type sont largement utilisés en raison des cadences de production rapides qu'ils permettent d'obtenir tout en respectant les qualités optiques requises par les fabricants automobiles.

Toutefois, de tels dispositifs sont plus spécialement réservés aux grandes séries et restent généralement mal adaptés au traitement de successions de vitrages présentant les unes par rapport aux autres des différences relativement importantes dans leurs dimensions, de l'ordre par exemple d'au moins quelques centimètres.

En effet, avec une forme supérieure telle que décrite dans le brevet EP 0 003 391, il est certes possible de prélever successivement des volumes de verre de tailles différentes mais pratiquement, on a observé que de bons résultats optiques n'étaient assurés que lorsque les volumes d'une nouvelle série ne recouvraient pas la zone occupée par les bords des volumes précédemment traités. De plus, tout changement de forme supérieure pose de nombreux problèmes de manipulation de la lourde forme en ciment réfractaire et de mise en température.

D'autre part, de délicats problèmes sont posés par les vitrages émaillés, c'est à dire ceux portant sur tout ou partie d'une de leurs faces un revêtement d'émail. Or ceux-ci constituent actuellement la grande majorité des vitrages, l'émail ayant entre autre une fonction esthétique dans le cas des bandes d'émail déposées le long des bords des vitrages montés par collage, en particulier dans les automobiles, de plus, l'émail évite que la colle ne se détériore sous l'action du soleil, une fonction pare-soleil dans le cas des toits ouvrants ou en core une fonction de conduction de l'électricité et/ou de recouvrement des arrivées électriques ou "busbars" pour les lunettes arrières de véhicules équipés de systèmes autodégivrants. Cette énumération non limitative montre combien sont rares actuellement les vitrages automobiles non pourvus d'émail.

Les techniques d'émaillage utilisées nécessitent une vitrification à une température équivalente à celle nécessaire pour le bombage et/ou la trempe du verre. Aussi a t-on naturellement proposé d'effectuer cette vitrification dans le four de chauffage en vue du bombage et de la trempe, ce qui signifie que les feuilles de verre sont chargées dans ledit four alors qu'elles présentent un décor non vitrifié, généralement pâteux, sur leur face de dessus, c'est à dire sur la face qui n'est pas en contact avec le convoyeur, et qui par conséquent se retrouve plus tard en contact avec la forme supérieure, alors que l'émail en cours de vitrification est encore très fragile, sensible à l'abrasion et collant.

Ce contact entre l'émail et la forme supérieure, entraîne d'une part une détérioration plus ou moins importante des bandes émaillées et d'autre part une souillure de la forme supérieure. En outre, la surface de contact de la forme supérieure est bien souvent recouverte de papier ou tissu réfractaire qui procure un contact plus doux avec le verre mais sur lequel l'émail a fortement tendance à coller, ce qui nécessite que le papier ou tissu réfractaire soit fréquemment remplacé, d'où de multiples interruptions de production. Pour réduire la fréquence de celles-ci, on peut certes choisir de traiter successivement des volumes de tailles décroissantes, évitant ainsi que des surfaces de verre non émaillées ne soient en contact avec la forme à l'emplacement des bandes d'émail d'un volume précédemment traité. Mais, d'une part cette précaution impose un soin particulier apporté à la planification du traitement de bombage-trempe et de plus elle n'apporte qu'une solution limitée car un changement fréquent du revêtement de papier ou tissu réfractaire, reste nécessaire. En outre, suivant la technique du brevet EP 0 003 391 chaque nouveau revêtement de papier ou tissu doit être percé selon un schéma précis pour permettre à la dépression au travers des trous de la forme en ciment réfractaire de s'exercer.

La présente invention vise un formage des feuilles de verre dans lequel on puisse traiter successivement un grand nombre de volumes de verre, de tailles différentes et pouvant éventuellement être émaillées sur tout ou partie d'une de leurs faces, sans pour autant nécessiter un changement trop fréquent de matériel, ni une préparation trop longue de ce matériel.

Ces problèmes sont résolus selon l'invention par un dispositif de formage des feuilles de verre prévu pour la mise en œuvre du procédé de formage énoncé au préambule de la revendication 1, ce dispositif se caractérisant en ce qu'il comporte un caisson d'aspiration sans fond fixé sur une chambre d'aspiration dans lequel est placée une forme supérieure à la périphérique de laquelle est créée une dépression, la forme supérieure non perforée ayant une face inférieure plus petite que la face de la feuille de verre à conformer, de sorte que sur toute la périphérie de la forme supérieure de bombage existe un espace intercalaire entre les bords de la feuille de verre et les bords de la forme supérieure, ladite forme de bombage ayant un rayon de courbure supérieur au rayon de courbure que l'on désire conférer à la feuille de verre.

L'invention a également pour objet une variante d'un procédé de formage énoncé au préambule de la revendication 13, caractérisée en ce que le transfert vertical du verre est obtenu par une dépression créée à la périphérie de la forme supérieure et en ce que la feuille de verre est appliquées asymétriquement contre la forme supérieure.

De préférence, et quoiqu'il ne s'agisse là que d'une variante avantageuse de l'invention, la forme supérieure a sa face inférieure, en contact avec le verre, située à une hauteur inférieure à celle de la limite inférieure des parois latérales du caisson sans fond.

Cette mesure prise relativement à la forme supérieure a pour effet premier que la feuille de verre ne pénètre plus à l'intérieur du caisson de dépression mais reste à l'extérieur de celui-ci. Ceci entraîne naturellement des fuites latérales plus importantes et la nécessité d'une plus grande force d'aspiration. Toutefois, il est apparu que cette mesure d'apparence mineure et plutôt défavorable permettait nombre de développements de l'invention particulièrement avantageux.

En premier lieu et il s'agit là d'un avantage direct, même en cas d'un mauvais centrage de la feuille de verre relativement à la forme supérieure, il n'y a plus à craindre que les bords de la feuille n'entrent en contact avec les parois du caisson de dépression, entraînant alors un marquage irrémédiable du verre.

Cette liberté de positionnement de la feuille relativement à la forme supérieure et surtout au caisson d'aspiration ouvre un grand nombre de choix dans les dimensions relatives de la feuille, de la forme et du caisson.

Il devient ainsi possible de travailler des feuilles de verre ayant des formes relativement variées avec un même dispositif, c'est-à-dire sans changement ni de caisson d'aspiration, ni de forme supérieure.

Ainsi, lorsque les volumes de verre traités successivement présentent des dimensions différentes et que l'on cherche à obtenir des rayons de courbure importants, et pouvant éventuellement varier d'un volume à l'autre, de bons résultats sont obtenus avec une forme supérieure ayant un rayon de courbure infini, donc plane dont le rôle est alors limité à celui d'auxiliaire du transfert vertical d'une feuille de verre échauffée à sa température de ramollissement. Le bombage proprement dit de la feuille est effectué alors exclusivement par affaissement de la feuille de verre sur un cadre de bombage.

Dans ce cas, on choisit de préférence une forme supérieure réduite, c'est-à-dire dont les dimensions sont très inférieures à celles du volume traité.

Ainsi, lorsque les volumes ont subi un émaillage à leur périphérie, il est possible de choisir une forme dont les dimensions sont telles que la forme supérieure n'entre pas en contact avec la couche d'émail. La forme est alors avantageusement choisie de dimensions correspondant à la plus faible surface libre de verre, c'est à dire à la partie non émaillée présente sur les différents volumes traités. Selon l'invention, même lorsque cette surface libre n'occupe qu'une faible proportion de la surface du volume ou est répartie asymétriquement sur le pourtour de celui-ci, un formage est possible à partir d'une forme supérieure et d'un caisson de dépression uniques pour différents modèles de vitrages.

3

Lorsque des rayons de courbure plus faibles sont recherchés, il est préférable de substituer à une forme supérieure plane une forme supérieure galbée qui assure un préformage. Mais là encore, même si les volumes finis doivent présenter des galbes différents, pour des dimensions quasi-identiques naturellement, le remplacement de la forme supérieure peut être évité. En outre, selon l'invention la forme supérieure peut être dotée avantageusement de dispositifs permettant d'obtenir une courbure plus ou moins importante de la forme supérieure, sa courbure restant malgré tout inférieure à celle du cadre de bombage. Ainsi, la modification de la forme supérieure s'effectue par un simple réglage donc dans un minimum de temps.

Lorsque les volumes diffèrent trop pour ce qui concernent leurs dimensions et surtout leur galbe après formage, le changement de forme supérieure ne peut être évité. Toutefois, le remplacement de la forme supérieure et même du caisson peuvent être effectués très rapidement.

Selon un mode de réalisation particulièrement préféré de l'invention, la forme supérieure est construite dans un matériau léger, par exemple en acier réfractaire ce qui facilite grandement sa manutention. De plus, la forme supérieure étant montée avantageusement non solidaire du caisson de dépression, le seul remplacement de la forme supérieure en fonction des dimensions de vitrage est possible à l'intérieur même de l'enceinte de formage chauffée, soit avec un minimum de pertes calorifiques et de temps.

Ces différentes mises en oeuvre de l'invention montrent la grande richesse technique créée par la liberté accordée à la feuille de verre relativement à la forme et au caisson d'aspiration. L'énumération faite précédemment illustre bien la polyvalence d'une cellule de formage selon l'invention, des volumes de verre peu différents les uns les autres pouvant être traités successivement sans entraîner le moindre arrêt supplémentaire de production, et des volumes de verre différant fortement par leurs tailles, leurs galbes ou encore l'emplacement de leurs décors, pouvant être également traités avec un minimum de formes et de caissons.

D'autres avantages et caractéristiques de l'invention apparaîtront d'une manière plus détaillée dans la description qui suit, faite en référence aux dessins annexés et qui représentent :

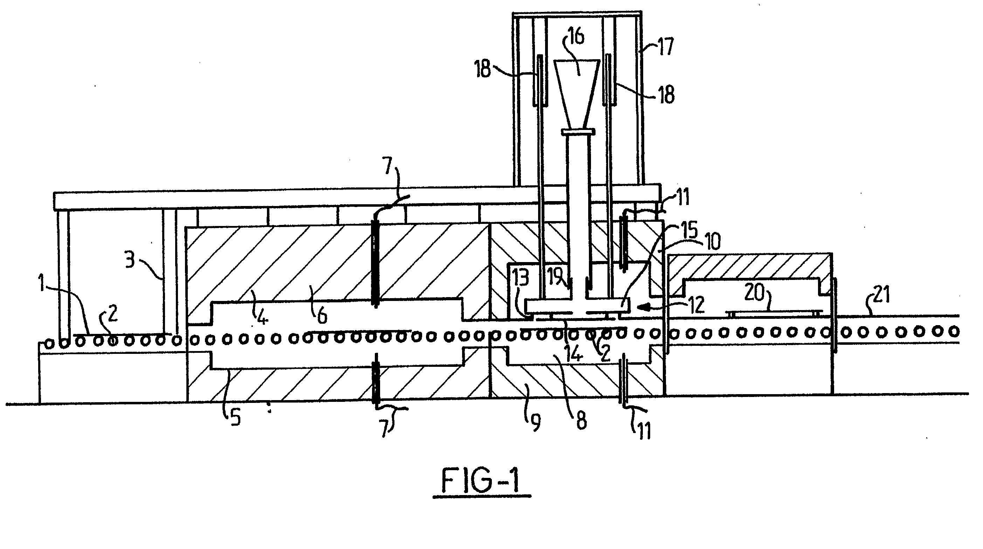

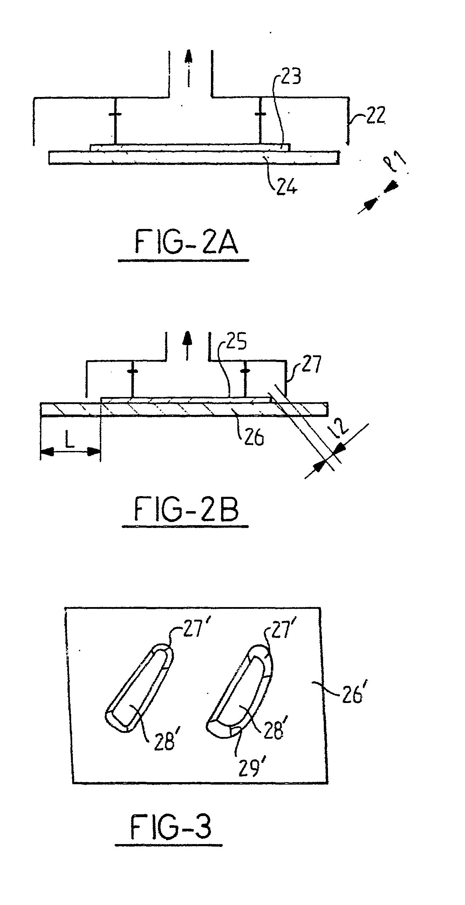

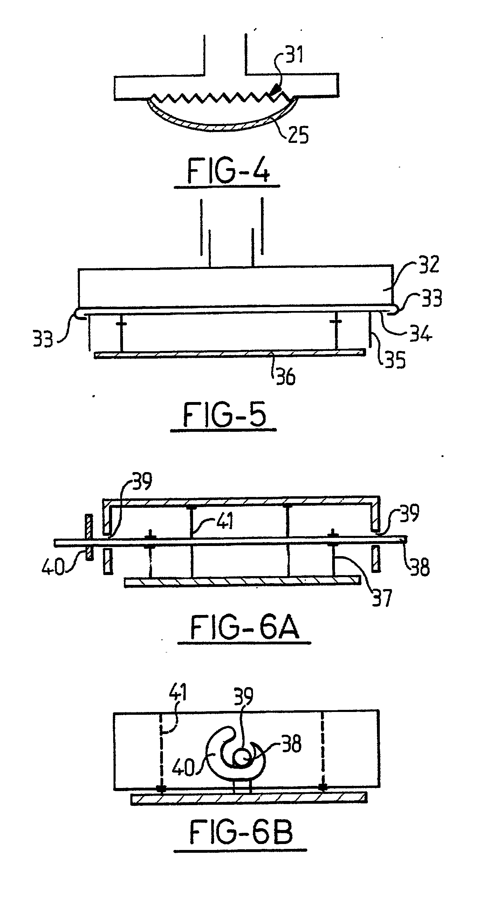

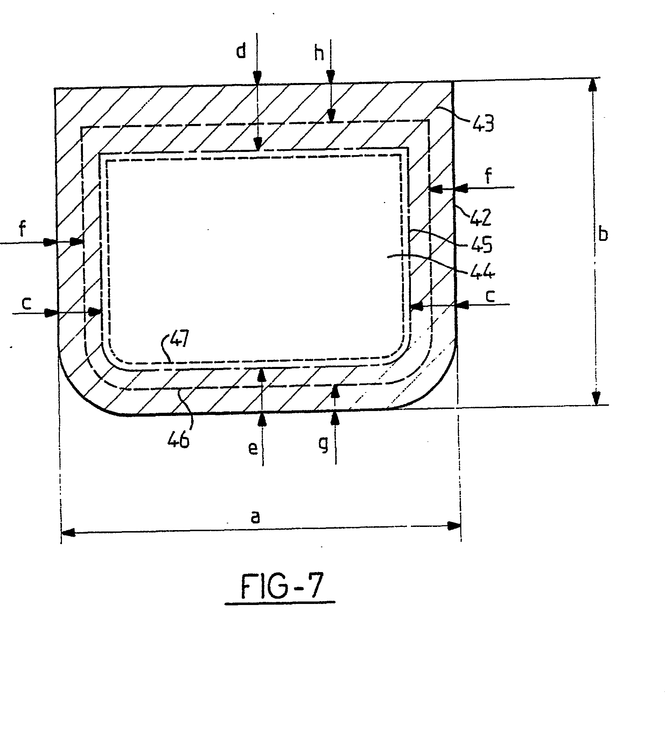

. figure 1 : une vue schématique d'une unité de formage mettant en oeuvre un dispositif de formage suivant un mode de réalisation de l'invention.
. figures 2A, 2B, : des coupes longitudinales de deux ensembles de transfert conformes à deux modes de réalisation de l'invention.
. figure 3 : une vue de face d'une forme supérieure plus spécialement destinée au transfert de deux pièces en verre de petites dimensions,
. figure 4 : une coupe longitudinale d'un dispositif de déformation de la forme supérieure.
. figure 5 : une cope longitudinale d'un dispositif de montage du caisson d'aspiration.
. figures 6A et 6B : deux vues en coupe longitudinale et suivant la flèche F d'un dispositif de montage de la forme sur le caisson d'aspiration.
. figure 7 : un exemple des géométries relatives du caisson de la forme supérieure et du vitrage dans le cas d'un vitrage présentant à sa périphérie un émaillage.

La figure 1, illustre la mise en oeuvre d'une cellule de préformage selon l'invention.

La feuille de verre 1 est déposée sur un lit de rouleaux 2, manuellement ou de préférence par un dispositif de chargement automatique ici non représenté. Le lit de rouleaux 2 traverse un four de chauffage horizontal ou four tunnel 4 dont l'ouverture est fermée par exemple par des rideaux souples 3. Le four tunnel 4 comporte une sole 5 et une voûte 6 en matériau réfractaire, et il est chauffé par des résistances électriques 7. Il permet l'échauffement des feuilles de verre jusqu'à une température proche de leur point de remollissement, de l'ordre par exemple de 630-640°C. A la sortie du four les feuilles, toujours sur leur lit de rouleaux, sont directement conduites à la cellule de formage 8.

Cette cellule de formage 8 comporte une sôle 9 et une voûte 10, équipées de résistances électriques 11 qui maintiennent la température aux environs de 680-700°C.

La position de la feuille de verre est repérée, au moyen par exemple d'une cellule photoélectrique, ou mieux d'un détecteur mécanique. Ce détecteur est avantageusement constitué par un doigt formant butée, porté par exemple par un des rouleaux et apte à s'escamoter sous la poussée de la feuille de verre. Le mouvement du doigt détecteur est enregistré par des moyens électroniques avantageusement placés à l'extérieur de l'enceinte chauffée, qui commandent avec des retards réglables différentes opérations ultérieures et notamment l'arrêt de la feuille de verre sous le dispositif de transfert 12 ou plus précisément sous la forme supérieure 14. Ce dispositif de transfert 12, comporte essentiellement un caisson d'aspiration sans fond 13 et une forme supérieure 14. Le caisson 13 est fixé sur une chambre d'aspiration 15 reliée à un dispositif d'aspiration 16, par exemple du type trompe Bertin. L'ensemble formé par la forme 14, le caisson 13 et la chambre 15 est suspendu à un bâti 17 par l'intermédiaire de vérins 18 ou de tout autre dispositif de montée-baisse permettant d'abaisser ou de relever le caisson 13 et la forme 14 fixés solidairement sur celui-ci. Pour permettre ces mouvements de montée-baisse, la chambre d'aspiration 15 est reliée au dispositif d'aspiration 16, par l'intermédiaire de brides folles 19 assurant l'étanchéité.

En position basse, la forme 14 est approchée à quelques millimètres de la feuille de verre de sorte que celle-ci soit soulevée par le courant d'aspiration et plaquée contre la forme. A ce moment, le dispositif de transfert 12 est relevé ce qui permet d'introduire sous lui un cadre 20 monté sur des rails 21. Ce cadre 20 ayant le profil à donner à la feuille de verre peut être un cadre ouvert en son centre, ou autrement dit un "squelette de bombage". L'aspiration est alors au moins partiellement supprimée et de ce fait, la feuille de verre est posée dans le cadre 20 afin d'être conduite au poste de trempe.

La figure 2A illustre plus précisément un mode de réalisation d'un dispositif de transfert selon l'invention. Un caisson de dépression 22 sans fond relié à un dispositif d'aspiration supporte une forme supérieure 23. Le caisson 22 et la forme supérieure 23 sont de préférence réalisés en acier réfractaire. La forme 23 présente des dimensions inférieures à celles de la feuille de verre 24. Notons que la figure 2A, comme d'ailleurs la figure 2B, correspond à la phase du transfert vertical pendant laquelle la feuille de verre est en position haute, plaquée contre la forme supérieure. Entre la feuille de verre 24 et les parois latérales du caisson 22, est préservé un espace de fuite latéral $l_1$. De préférence cet espace $l_1$ est de l'ordre de 5 mm, une valeur inférieure augmentant fortement les risques de contact entre le verre et les parois latérales du verre et une valeur supérieure nécessitant une augmentation de la puissance d'aspiration et donc corollairement, entraînant un coût d'exploitation plus important.

Conformément à la caractéristique de la revendication 1, la forme supérieure 23 a une face tournée vers la feuille de verre plus petite que celle-ci, préservant un espace intercalaire entre les bords de la forme supérieure et ceux de la feuille de verre.

Il a été constaté que même avec des formes supérieures dont les bords sont distants de L = 20 à 40 mm de la périphérie de la feuille de verre, il ne se produisait pas de marquage de la feuille de verre. Cette possibilité peut être plus particulièrement utilisée lorsque la feuille de verre est émaillée sur sa périphérie car alors l'émail n'est pas au contact de la forme et il n'y a pas de risques de dégradation de la couche d'émail, ni de souillure d'un papier ou d'un tissu réfractaire placé comme intercalaire entre la forme 25 et la feuille de verre 24.

D'autre part l'émail recouvrant éventuellement les bords de la feuille de verre n'est jamais au contact de la forme de sorte qu'il est possible de passer successivement des volumes présentant des émaillages différents.

De plus, et ceci constitue un avantage très important du dispositif selon l'invention, une même forme plane peut être utilisée pour un grand nombre de dimensions de la feuille de verre, et pour un grand nombre de profils de bombage à donner aux feuilles de verre.

Pour réduire encore les risques de marquage du verre par les parois latérales du caisson 22, il est avantageux d'employer un dispositif tel que schématisé à la figure 2B. Dans ce cas, la forme supérieure 25 est placée de façon à ce qu'une feuille de verre 26 ne puisse pénétrer à l'intérieur du caisson 27. Avantageusement et afin de réduire l'espace de fuite latérale $l_2$, le caisson 27 présente des dimensions seulement légèrement supérieures à celles de la forme supérieure 25 elle-même de dimensions très inférieures à celles du verre 26.

Ainsi, il est possible selon l'invention, de travailler avec un caisson et une forme polyvalente, c'est-à-dire susceptibles de convenir à la fabrication d'une pluralité de types de vitrages.

Travaillant avec un caisson d'aspiration de dimensions légèrement supérieures à celles de la forme supérieure qui est elle de dimensions très inférieures à celles du volume de verre traité, on peut bomber de façon satisfaisante tous les vitrages présentant sur leurs bords des bandes émaillées.

Les dispositifs de transfert décrits aux figures précédentes conviennent bien pour des vitrages automobiles de moyennes dimensions tels que par exemple des vitrages latérales ou des toits ouvrants panoramiques. La forme supérieure schématisée à la figure 3 est elle plus spécialement destinée à des vitrages automobiles telles que des vitres pour custodes ou pour déflecteurs, vitrages généralement approximativement triangulaires et de petites dimensions.

Dans ce cas, la forme supérieure est constituée par une plaque 26' dans laquelle sont pratiqués deux évidements 27' de dimensions proches de celles des feuilles de verre transférées. La plaque 26' porte deux petites plaques 28' de dimensions légèrement inférieures aux feuilles de verre. Ces plaques 28' sont situées sous la plaque 26', à une distance de par exemple 3 mm et sont rattachées à ladite plaque par des attaches 29'. De préférence ces attaches ne sont pas fixes et permettent de remplacer les plaques 28', en fonction des dimensions exactes des feuilles de verre. Il doit être noté que dans ce cas, la plaque 26' forme en fait les parois latérales du caisson de dépression. Le cadre de bombage est bien entendu adapté également à la réception de deux feuilles de verre.

Un tel dispositif est particulièrement simple et économique et permet d'atteindre d'importantes cadences de production.

Si une faible courbure doit être conférée à la feuille de verre, on utilise de préférence une forme supérieure légèrement galbée longitudinalement. La flèche de la forme supérieure reste alors inférieure à celle que l'on désire conférer au vitrage après bombage.

Une courbure particulière peut aussi être conférée à la forme supérieure pour réduire le problème du double bombage. En effet, on a indiqué précédemment que l'on avait intérêt à utiliser des formes supérieures galbées longitudinalement permettant de bomber cylindriquement la feuille de verre. Or, au moment de la pose sur le cadre 20, la feuille ramollie n'est pas soutenue en son centre et la gravité tend à lui donner dans sa partie centrale une courbure sphérique. Pour réduire ce bombage transversal incontrôlé, on peut selon une caractéristique avantageuse de l'invention conférer à la forme supérieure un contre-galbe transversal en lui donnant dans la direction perpendiculaire à la direction de défilement des feuilles de verre sur les rouleaux une flèche négative que les forces de gravité compensent au moment de la pose du vitrage ramolli sur le cadre 20.

Pour éviter un changement trop fréquent des formes supérieures, on utilise par exemple une forme supérieure du type illustré à la figure 4. Cette forme supérieure 25 est dotée en son dos d'un dispositif 31 du type tige filetée permettant de courber à volonté la forme supérieure 35. Le passage d'un rayon de courbure à un autre s'effectue ainsi par un simple réglage du dispositif 31, sans même devoir sortir du caisson d'aspiration 27. Ainsi l'interruption de production ne dure que le temps du réglage et n'entraîne pas de déséquilibre thermique entre les différentes pièces constituant la cellule de préformage. Un tel dispositif peut-être utilisé pour galber longitudinalement ou pour contre-galber transversalement la forme supérieure.

La combinaison des différents dispositifs précédemment cités peut bien entendu être envisagée. Notamment, on peut prévoir une forme supérieure destinée à la préhension simultanée de deux vitrages et présentant deux plaques 28' légèrement galbées.

Comme déjà indiqué, les parois latérales du caisson et la forme supérieure sont de préférence en acier réfractaire. Le fait de travailler avec des formes supérieures légères et bonnes conductrices de la chaleur facilite aussi grondement leur remplacement qui par ailleurs est moins fréquent que dans l'art antérieur.

Pour faciliter ce remplacement, le caisson d'aspiration est avantageusement construit en deux parties comme représenté à la figure 5. Il comporte ici une chambre d'aspiration 32, solidaire du système de montée-baisse, qui porte deux glissières 33 dans lesquelles viennent s'engager des coulisseaux 34 portant la jupe 35, c'est-à-dire le caisson d'aspiration proprement dit. Ainsi la jupe 35 portant la forme supérieure 36 peut-être démontée très rapidement. Au système de guidage pour glissière peut-être substitué un système de blocage avec un crochet ou une came de serrage d'un côté du caisson et une charnière de l'autre côté. Dans ce cas, le caisson sera engagé dans la cellule de formage en biais, calé dans la charnière puis pivoté pour être mis en place et bloqué en position, à l'aide du crochet de la came de serrage.

De tels systèmes permettent de remplacer très rapidement le dispositif de préformage avec une interruption totale de l'installation de seulement 15 minutes.

Le remplacement de la forme supérieure seule est aussi possible. Pour cela, la forme est avantageusement montée par des tirants 37 sur une barre de soutien 38, telle que celle représentée sur les figures 6A, 6B. La barre de soutien 38 est engagée dans un trou de centrage 39 percé dans le caisson de dépression et maintenue à son autre extrémité par un excentrique 40. Pour positionner avec exactitude la tôle, on utilise des butées 41, mais un tel dispositif peut-être remplacé par un dispositif à deux barres de soutien, avec doigt de centrage et came de serrage, ou encore avec glissière et crochet de blocage.

Avec un tel dispositif, le remplacement de la forme supérieure seule peut s'effectuer en seulement 5 minutes. Les temps de remplacement indiqués doivent s'entendre de « bon volume à bon volume ».

### c) Dimensions relatives du caisson, de la forme supérieure et du volume de verre

Les outillages suivants ont permis la réalisation de toits ouvrants bombés-trempés pour véhicules automobiles. Le volume a une épaisseur de 5 mm.

On a employé ici des formes supérieures planes dont les faces inférieures sont placées à environ 5 mm en-dessous du bas du caisson.

Le tableau II en annexe, illustre comment avec un faible nombre de caissons et de formes on peut traiter différents types de vitrages.

### d) Cas d'un volume émaillé en périphérie:

La figure 7 illustre la géométrie d'un volume de verre émaillé en périphérie. Il s'agit ici de la fabrication de toits ouvrants plus particulièrement destinés aux véhicules automobiles PEUGEOT 205 (marque déposée).

Ces vitrages 42 ont une longueur a de 795 mm, une largeur b de 650 mm. Leur périphérie 43 est recouverte par une couche d'émail alors que la partie centrale 44 est laissée sans émaillage. On a représenté en traits interrompus 45 la limite de la zone émaillée 43. La couche périphérique s'étend sur les côtés, sur une largeur c de 48 mm, à l'arrière du vitrage sur une largeur d de 128 mm et à l'avant sur une largeur e de seulement 52 mm. On a ainsi plus du tiers de la surface du vitrage pourvu d'un émaillage et de plus, cet émaillage n'est pas réparti symétriquement.

Toutefois, avec un dispositif de formage selon l'exemple de la figure 2B comportant un caisson 46 laissant des fuites latérales f, g, h, respectivement égales à 25 mm, 20 mm et 60 mm et une forme supérieure 47 représentée en traits pointillés, placée à 5 mm de la limite 45 de la zone émaillée 43, on a réalisé la prise en charge du vitrage par le dispositif de formage, c'est-à-dire son aspiration et son placage supérieur de façon asymétrique sans aucune détérioration de la zone émaillée qui à aucun moment, ne se trouve en contact direct avec la forme supérieure ou le caisson d'aspiration.

Ainsi une longue série de vitrages de ce type peut être produite sans interruption, le papier ou tissu réfractaire protégeant la forme supérieure n'étant pas soumis à une rapide dégradation ou délitage provoqué par l'émail.

Cet exemple illustre la très grande souplesse du dispositif selon l'invention.

e) Qualité optique :

Lorsque les vitrages entrent dans le champ visuel de l'automobiliste, il est très important que leur qualité optique soit sans reproche. Celle-ci a été vérifiée pour la série de vitrages illustrée au tableau III (en annexe) de la manière suivante : un vitrage est déclaré satisfaisant si une mire projetée sur un écran pour constituer deux raies verticales et parallèles, séparées de 12 mm n'est pas déformée de plus de 4 mm, lorsqu'un vitrage est interposé sur le trajet lumineux, le vitrage formant un angle de 10° avec la verticale et de 15° avec le rayon lumineux.

Les distances sont notées négativement si le caisson (ou la forme supérieure) à des dimensions inférieures à celles de la feuille de verre traitée.

Dans la dernière colonne du tableau III, on a indiqué la valeur (en mm) de la flèche donnée à la forme supérieure. Cette flèche est comptée négativement lorsque la forme est contre-galbée. La valeur donnée en référence est celle du galbe obtenu pour la feuille de verre après bombage.

L'exemple 7 illustre la possibilité d'une forte réduction du contre-bombage, grâce à l'utilisation d'une forme supérieure contre-galbée transversalement.

Dans tous les cas, un vitrage de 3 mm a subi avec succès le test précité, ce qui garantit qu'il est d'une qualité optique supérieure à celle exigée par les normes européennes (norme R 43).

Tableau I

| Epaisseur du verre | $1_1$ | $P_1$ (bars) | $P_2$ (bars) |
|---|---|---|---|
| 3 mm | 3 mm | 3 | 2,5 |
| 3 mm | 3 mm | 5 | 2,5 |
| 4 mm | 3 mm | 4 | 3,5 |
| 4 mm | 3 mm | 6 | 3,5 |

Tableau II

| Volume de verre (mm) | Caisson (mm) | Forme supérieure (mm) |
|---|---|---|
| 830 × 430 | 780 × 408 | 730 × 355 |
| 849 × 441 | | |
| 761 × 401 | 700 × 323 | 650 × 275 |
| 741 × 386 | | |
| 746 × 341 | | |
| 880 × 311 | 870 × 305 | 821 × 251 |
| 980 × 52 | 970 × 510 | 920 × 460 |

Tableau III

| | Type de fuite latérale | Distance de l'extrémité du caisson à l'extrémité du verre | Distance de la forme supérieure à l'extrémité du verre | Galbe |
|---|---|---|---|---|
| 1) | 1 | +5 mm | −7 mm | − |
| 2) | $1_1$ | +5 mm | −7 mm | − |
| 3) | $1_2$ | +5 mm | −40 mm | − |
| 4) | $1_3$ | −20 mm | −40 mm | − |
| 5) | $1_2$ | +5 mm | −7 mm | 10/10 |
| 6) | $1_2$ | +5 mm | −7 mm | 20/10 |
| 7) | $1_2$ | +5 mm | −7 mm | −7/−3 |

**Revendications**

1. Dispositif de formage de feuilles de verre pour la mise en œuvre du procédé de formage selon lequel les feuilles de verre (24) sont amenées horizontalement dans un four de chauffage (4) puis conduites à un poste de formage (8) où elles sont transférées verticalement jusqu'à une forme supérieure (14, 23, 25), l'application contre la forme supérieure étant obtenue par aspiration, les feuilles de verre (24) étant alors laissées tomber sur un cadre de bombage .(20) où le verre s'affaisse sous l'effet de l'inertie et de la gravité, dispositif caractérise en ce qu'il comporte un caisson d'aspiration sans fond (13, 22, 27) fixé sur une chambre d'aspiration (15) dans lequel est placée une forme supérieure (14, 23, 25) à la périphérie de laquelle est créée une dépression, la forme supérieure (14, 23, 25) non perforée ayant une face inférieure plus petite que la face de la feuille de verre (24) à conformer de sorte que sur toute la périphérie de la forme supérieure (23) de bombage existe un espace intercalaire entre les bords de la feuille de verre (24) et les bords de la forme supérieure (14, 23, 25) et ayant un rayon de courbure supérieur au rayon de courbure que l'on désire conférer à la feuille de verre (24).

2. Dispositif selon la revendication 1, caractérisé en ce que la forme supérieure (25) a sa face inférieure en contact avec le verre (26), située à une hauteur inférieure à celle de la limite inférieure des parois latérales du caisson sans fond (27).

3. Dispositif selon une des revendications 1 à 2, caractérisé en ce que ladite forme supérieure (14, 23, 25) est plane.

4. Dispositif selon une des revendications 1 à 3, caractérisé en ce que ladite forme supérieure (14, 23, 25) présente une courbure longitudinale inférieure à la courbure que l'on désire conférer à la feuille de verre.

5. Dispositif selon une des revendications 1 à 4, caractérisé en ce que le caisson (27) présente des dimensions supérieures à celles de la forme supérieure (25) et inférieures à celles de la feuille de verre (26).

6. Dispositif selon une des revendications 1 à 5, caractérisé en ce que la forme supérieure est constituée par une plaque (26') comportant des évidements (27') de dimensions proches de celles des feuilles de verre transférées et des plaques (28'), de dimensions inférieures à celles des feuilles de verre et fixées à la plaque (26') par des attaches (29').

7. Dispositif selon une des revendications 1 à 6, caractérisé en ce que la forme supérieure (14, 23, 25) présente un contre-galbe transversal.

8. Dispositif selon une des revendications 1 à 7, caractérisé en ce que ladite forme supérieure (14, 23, 25) est munie de dispositifs (31) permettant de faire varier sa courbure.

9. Dispositif selon une des revendications 1 à 7, caractérisé en ce que ladite forme supérieure (14, 23, 25) est en acier réfractaire.

10. Dispositif selon une des revendications 1 à 8, caractérisé en ce que le caisson d'aspiration est constitué d'une chambre (32) et d'une jupe (35) munies de moyens de démontage (33, 34).

11. Dispositif selon une des revendications 1 à 10, caractérisé en ce que la forme supérieure est démontable du caisson en étant montée par des tirants (37) sur une barre de soutien (38) qui s'engage dans des perçages et orifices du caisson (39).

12. Application du dispositif selon une des revendications 1 à 11, au formage de feuilles de verre présentant à leur périphérie une couche d'émail.

13. Procédé de formage du verre suivant lequel la feuille de verre est échauffée en position horizontale dans un four de chauffage (4) transférée verticalement jusqu'à une forme supérieure (14, 23, 25) ayant un rayon de courbure supérieur à celui que l'on désire conférer à la feuille de verre (24) et est laissée tomber sur un cadre de bombage (20) où le verre s'affaisse sous l'effet de l'inertie et de la gravité, caractérisé en ce que le transfert vertical du verre est obtenu par une dépression créée à la périphérie de la forme supérieure (14, 23, 25) et en ce que la feuille de verre est appliquée asymétriquement contre la forme supérieure.

**Patentansprüche**

1. Biegevorrichtung für Glasscheiben für die Durchführung eines Biegeverfahrens, bei dem die Glasscheiben (24) horizontal in einem Heizofen (4) geführt und danach einer Biegeanlage (8) zugeführt werden, wo sie vertikal bis zu einer oberen Form (14, 23, 25) übergeben werden, wobei das Anlegen an die obere Form durch Ansaugen erfolgt, die Glasscheiben (24) dann auf einen Biegerahmen (20) fallengelassen werden, wo sich das Glas unter dem Einfluß der Trägheit und der Schwerkraft biegt, dadurch gekenzeichnet ist, daß die Vorrichtung einen Ansaugbehälter ohne Boden (13, 22, 27) aufweist, der auf einer Ansaugkammer (15) befestigt ist, in der eine obere Form (14, 23, 25) angeordnet ist, an deren Umfang ein Unterdruck erzeugt wird, wobei die obere Form (14, 23, 25) keine Durchbrechungen aufweist und eine kleinere untere Oberfläche hat als die zu biegende Glasscheibe (24), so daß auf dem gesamten Umfang der oberen Biegeform (23) ein Zwischenraum zwischen den Rändern der Glasscheibe (24) und den Rändern der oberen Form (14, 23, 25) besteht, sowie einen Krümmungsradius, der größer ist als der Krümmungsradius, der der Glasscheibe (24) verliehen werden soll.

2. Vorrichtung nach Anspruch 1, dadurch gekennzeichnet, daß die obere Form (25) mit ihrer Unterseite, die in Kontakt mit dem Glas (26) ist, in einer Höhe angeordnet ist, die geringer ist als die der unteren Begrenzung der Seitenwände des bodenlosen Behälters (27).

3. Vorrichtung nach einem der Ansprüche 1 bis 2, dadurch gekennzeichnet, daß die obere Form (14, 23, 25) plan ist.

4. Vorrichtung nach einem der Ansprüche 1 bis 3, dadurch gekennzeichnet, daß die obere Form (14, 23, 25) eine geringere Längskrümmung aufweist als die Längskrümmung, die der Glasscheibe verliehen werden soll.

5. Vorrichtung nach einem der Ansprüche 1 bis 4, dadurch gekennzeichnet, daß der Behälter (27) Abmessungen aufweist, die größer sind als die der oberen Form (25) und kleiner als die der Glasscheibe (26).

6. Vorrichtung nach einem der Ansprüche 1 bis 5, dadurch gekennzeichnet, daß die obere Form von einer Aussparungen (27) aufweisenden Platte (26) mit Abmessungen, die denen der übergebenen Glasscheiben nahekommen, sowie Platten (28'), die Abmessungen haben, die kleiner sind als die der Glasscheiben und die an der Platte (26') durch Halterungen (29') befestigt sind, gebildet wird.

7. Vorrichtung nach einem der Ansprüche 1 bis 6, dadurch gekennzeichnet, daß die obere Form (14, 23, 25) eine transversale Gegenwölbung aufweist.

8. Vorrichtung nach einem der Ansprüche 1 bis 7, dadurch gekennzeichnet, daß die obere Form (14, 23, 25) mit Einrichtungen (31) ausgestattet ist, die es erlauben, die Krümmung zu variieren.

9. Vorrichtung nach einem der Ansprüche 1 bis 7, dadurch gekennzeichnet, daß die obere Form (14, 23, 25) aus hitzebeständigem Stahl ist.

10. Vorrichtung nach einem der Ansprüche 1 bis 8, dadurch gekennzeichnet, daß der Ansaugbehälter von einer Kammer (32) und einem mit Demontageeinrichtungen (33, 34) versehenen Mantel (35) gebildet wird.

11. Vorrichtung nach einem der Ansprüche 1 bis 10, dadurch gekennzeichnet, daß die obere Form vom Behälter demontierbar ist, dadurch daß sie durch Verankerungen (37) an einem Stützstab (38) befestigt ist, der in Bohrungen und Öffnungen (39) des Behälters eingreift.

12. Verwendung der Vorrichtung nach einem der Ansprüche 1 bis 11 zum Biegen von Glasscheiben, die in ihrem Randbereich eine Emailschicht aufweisen.

13. Verfahren zum Biegen von Glas, bei dem die Glasscheibe in horizontaler Stellung in einem Heizofen (4) aufgeheizt, vertikal zu einer oberen Form (14, 23, 25) mit einem Krümmungsradius, der größer ist als der, den man der Glasscheibe (24) verleihen will, übergeben und auf einen Biegerahmen (20) fallengelassen wird, wo das Glas sich unter der Wirkung der Trägheit und der Schwerkraft durchbiegt, dadurch gekennzeichnet, daß die vertikale Übergabe des Glases durch einen an dem Umfang der oberen Form (14, 23, 25) erzeugten Unterdruck erzielt wird und daß die Glasscheibe asymmetrisch an die obere Form angelegt wird.

## Claims

1. Device for shaping glass sheets for carrying out the shaping method, according to which the glass sheets (24) are brought horizontally into a heating furnace (4), and then conducted to a shaping station (8) where they are transferred vertically as far as an upper mould (14, 23, 25), the application against the upper mould being achieved by suction, the glass sheets (24) being then allowed to fall onto a curving frame (20), where the glass subsides under the effect of inertia and gravity, the device being characterized in that it comprises an open-bottomed suction chest (13, 22, 27) fixed to a suction chamber (15), in which chest there is situated an upper mould (14, 23, 25), at the periphery of which a suction is created, the upper mould (14, 23, 25), being non-perforated, having a lower face that is smaller than the face of the glass sheet (24) to be shaped, so that around the entire periphery of the upper curving mould (23) there exists an intermediate space between the edges of the glass sheet (24) and the edges of the upper mould (14, 23, 25), and having a radius of curvature greater than the radius of curvature which it is desired to impart to the glass sheet (24).

2. Device according to claim 1, characterized in that the upper mould (25) has its lower face in contact with the glass (26), situated at a height lower than that of the lower limit of the lateral walls of the open-bottomed chest (27).

3. Device according to one of claims 1 to 2, characterized in that said upper mould (14, 23, 25) is plane.

4. Device according to one of claims 1 to 3, characterized in that said upper mould (14, 23, 25) has a longitudinal curvature smaller than the curvature which it is desired to impart to the glass sheet.

5. Device according to one of claims 1 to 4, characterized in that the chest (27) has dimensions larger than those of the upper mould (25) and smaller than those of the glass sheet (26).

6. Device according to one of claims 1 to 5, characterized in that the upper mould is constituted of a plate (26') comprising cut-outs (27') of dimensions close to those of the glass sheets transferred and plates (28') of dimensions smaller than those of the glass sheets and fixed to the plate (26') by attachments (29').

7. Device according to one of claims 1 to 6, characterized in that the upper mould (14, 23, 25) has a transverse countercuvature,

8. Device according to one of claims 1 to 7, characterized in that said upper mould (14, 23, 25) is equipped with devices (31) enabling its curvature to be varied.

9. Device according to one of claims 1 to 7, characterized in that said upper mould (14, 23, 25) is of refractory steel.

9

10. Device according to one of claims 1 to 8, characterized in that the suction chest is constituted of a chamber (32) and of a skirt (35), these being equipped with disconnection means (33, 34).

11. Device according to one of claims 1 to 10, characterized in that the upper mould can be disconnected from the chest by being mounted by tension members (37) on a support bar (38) which engages into perforations and orifices of the chest (39).

12. Application of the device according to one of claims 1 to 11 to the shaping of glass sheets having, at their periphery, an enamel coating.

13. Method of shaping glass, according to which the glass sheet is heated in a horizontal position in a heating furnace (4), is transferred vertically as far as an upper mould (14, 23, 25) having a radius of curvature greater than that which it is desired to impart to the glass sheet (24) and is allowed to fall onto a curving frame (20) where the glass subsides under the effect of inertia and gravity, characterized in that the vertical transfer of the glass is achieved by a suction created at the periphery of the upper mould (14, 23, 25) and in that the glass sheet is applied asymmetrically against the upper mould.

FIG-1

FIG-2A

FIG-2B

FIG-3

FIG-4

FIG-5

FIG-6A

FIG-6B

FIG-7